# FASCICULE DE BREVET EUROPEEN

(11) **EP 0 420 746 B1**
(45) Date de publication et mention de la délivrance du brevet: **07.04.1993**
(21) Numéro de dépôt: 90402643.2
(22) Date de dépôt: 26.09.1990
(51) Int. Cl.: F02K 3/072, F02C 3/067

(54) **Moteur de propulsion à soufflantes contrarotatives**
Gegenläufiges Bläsertriebwerk
Contrarotative fan jet engine

(30) Priorité: 27.09.1989 FR 8912630
(43) Date de publication de la demande: 03.04.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lardellier, Alain Marie Joseph, F-77000 Melun (FR)
(74) Mandataire: Moinat, François

(56) Documents cités:
- FR-A- 1 136 237
- FR-A- 2 217 545
- FR-A- 2 606 081
- US-A- 2 426 098

## Description

La présente invention concerne un moteur à turbine à gaz destiné à la propulsion d'un avion, du genre comportant un générateur de gaz qui alimente deux turbines de travail lentes contrarotatives, imbriquées.

FR-A-2 535 394 décrit un moteur à turbine à gaz de ce type dans lequel les turbines de travail sont disposées en aval du générateur de gaz et sont entraînées directement par les gaz chauds sortant dudit générateur. Lesdites turbines entrainent directement sans réducteur, soit deux étages d'hélices contrarotatives, soit deux étages de soufflantes carénées par lesquelles est assurée la propulsion. Deux solutions de montage sont proposées. L'une prévoît de disposer les hélices ou les soufflantes à l'arrière du moteur, ce qui présente des inconvénients et des difficultés lors d'un montage sous les ailes d'un avion. L'autre prévoit de les disposer à l'avant du moteur, ce qui impose, pour l'entraînement, des arbres de liaison dont la mise en place comporte également des inconvénients.

FR-A-2 560 642 décrit un moteur à turbine à gaz du même type dans lequel un compresseur de gavage à contrarotation est associé aux soufflantes avant contrarotatives. Un dispositif de réglage du pas des aubes d'un étage de soufflante est adjoint, permettant d'obtenir une inversion du flux.

FR-A-2 606 081 décrit un moteur à turbine à gaz du genre précité dans lequel, par rapport au sens de déplacement de l'avion, les gaz circulent dans le générateur de gaz à partir d'une chambre annulaire disposée à l'arrière, vers l'avant et audit générateur de gaz est associée une manche d'entrée d'air composée d'une multiplicité de canaux disposés circonférentiellement autour de l'enveloppe externe du moteur et débouchant dans ladite chambre et dont le sens de circulation des gaz chauds sortant dudit générateur de gaz est inversé pour repartir vers les turbines de travail de l'avant vers l'arrière de telle sorte que la disposition interne du moteur comporte en partant de l'avant vers l'arrière par rapport au sens de déplacement de l'avion propulsé, successivement :
- en superposition radiale partielle, les turbines contrarotatives imbriquées de travail et le conduit axial de sortie du générateur de gaz,
- les étages de turbine du générateur de gaz,
- la chambre de combustion,
- les étages de compression du générateur de gaz,
- la chambre annulaire d'entrée d'air du générateur de gaz.

Selon ce document, les turbines de travail contrarotatives sont associées à deux étages d'hélices contrarotatives placées au même niveau longitudinal, le moteur constituant ainsi un turbopropulseur à hélices avant du type dit "propfan tracteur".

La présente invention a pour but de présenter une variante du moteur précédemment décrit dans laquelle les soufflantes amont ne sont plus disposées en superposition radiale avec les turbines de travail et le conduit axial de sortie du générateur de gaz mais en avant des turbines de travail ce qui permet de réaliser un moteur possédant le même taux de dilution avec un maître-couple beaucoup moins important.

L'invention a également pour but de réaliser un sous-ensemble modulaire comportant les turbines de travail contrarotatives et les soufflantes de telle sorte que ledit sous-ensemble soit plus facilement séparable du générateur de gaz par l'avant.

L'invention a aussi pour but de réaliser un groupe turboréacteur à faible traînée et dont le montage en turboréacteur tracteur sous l'aile d'un avion est facilité.

L'invention a donc pour objet un moteur à turbine à gaz destiné à la propulsion d'un avion, du genre comportant un générateur de gaz qui alimente deux turbines de travail lentes contrarotatives entrainant deux soufflantes et dans lequel, par rapport au sens de déplacement de l'avion, les gaz circulent dans le générateur de gaz de l'arrière vers l'avant puis de l'avant vers l'arrière dans les turbines libres, caractérisée en ce qu'à la turbine libre radialement interne est associée un arbre central s'étendant vers l'avant du moteur et supportant un disque portant la soufflante avant tandis qu'à la turbine libre radialement externe est associée un tambour avant monté tournant entre l'arbre de soufflante avant et une structure fixe du moteur, ledit tambour portant la soufflante arrière de telle sorte que le moteur comprend de l'avant vers l'arrière et successivement :
- la soufflante avant
- la soufflante arrière et en superposition radiale la manche d'entrée d'air du générateur de gaz, ladite manche étant formée de canaux disposés à l'intérieur de l'enveloppe externe du moteur,
- les turbines libres imbriquées et en superposition radiale, le conduit axial du générateur de gaz,
- la turbine du générateur de gaz
- la chambre de combustion
- le compresseur du générateur de gaz
- une chambre annulaire d'entrée d'air du générateur de gaz.

Selon une particularité de l'invention, la soufflante avant peut comporter un anneau intermédiaire à mi-hauteur des pales de la soufflante et des aubes intermédiaires peuvent être disposées entre l'anneau externe et l'anneau intermédiaire, formant une grille radialement externe de soufflante avant possédant un nombre de pales double de celui de la grille interne.

D'autres caractéristiques seront précisées dans le complément de description qui va suivre accompagné de planches de dessins parmi lesquelles :
- la figure 1 est une demi- coupe longitudinale axiale d'un turboréacteur selon l'invention ;
- la figure 2 est une vue de l'avant de la soufflante amont dans un mode de réalisation comportant un anneau intermédiaire et une couronne externe possédant un nombre d'aubes supérieur à celui de la couronne interne ;
- la figure 3 schématise un mode de réalisation possible d'un moyen de variation de la section secondaire disposé en aval de la soufflante arrière.

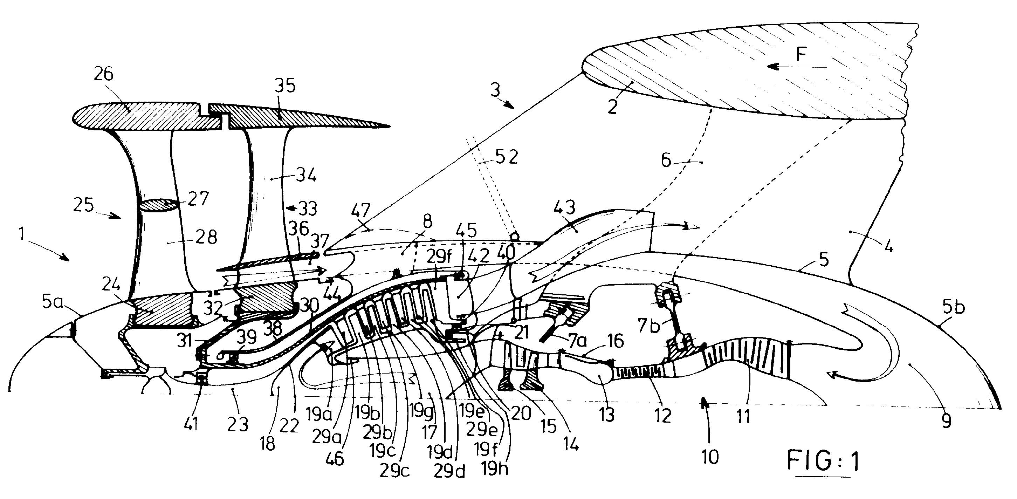

Sur la figure 1, qui représente une réalisation d'une turbosoufflante avant, le moteur à turbine à gaz 1 est relié à la structure de l'avion propulsé, représenté par une aile 2, par un mât-pylône 3 dont la structure 4 est solidaire de l'enveloppe externe 5 du moteur et qui comporte un pylône-support 6 auquel sont fixés des bras- support 7a et 7b. L'enveloppe externe 5 du moteur comporte une partie avant 5a et une partie arrière 5b de forme aérodynamiquement profilée, généralement conique. Avant et arrière sont définis par rapport au sens de déplacement de l'avion propulsé selon la flèche F indiquée sur la partie avion. Sur ladite enveloppe externe 5 du moteur sont disposés circonférentiellement une multiplicité de canaux 8 formant une manche d'entrée d'air et débouchant dans une première chambre annulaire 9 de tranquillisation. Dans les canaux 8, l'air circule de l'avant vers l'arrière et à partir de la chambre 9 l'air subit une première inversion de sens de circulation pour circuler de l'arrière vers l'avant en entrant dans un générateur de gaz 10 qui comporte les éléments connus et classiques mais disposés successivement de manière particulière à la présente invention en partant de l'arrière vers l'avant : un compresseur axial multiétagé 11 à basse pression, puis un compresseur axial multiétagé 12 à haute pression d'où l'air comprimé passe dans une chambre de combustion annulaire 13 qui alimente en gaz chauds les turbines d'entrainement des compresseurs, respectivement à haute pression 14 et à basse pression 15. Le générateur de gaz 10 ainsi constitué est supporté et relié au pylône-support 6 par les bras-supports 7a et 7b fixés à l'enveloppe externe 16 du générateur de gaz au niveau du carter de compresseur, ce qui présente l'avantage de disposer les points de fixation en zone froide. Le générateur de gaz 10 est prolongé vers l'avant par un conduit axial 17 de sortie des gaz qui les achemine à une seconde chambre annulaire 18 à partir de laquelle les gaz subissent une seconde inversion du sens de circulation pour circuler de l'avant vers l'arrière en entrant dans les étages de turbines de travail disposées en superposition radiale externe audit conduit 17. Un premier rotor de turbine 19 comporte plusieurs étages d'aubes 19a, 19b, 19c, 19d, 19e, 19f dont les bases sont fixées du côté radialement interne à un tambour interne 19g dont l'extrémité aval forme une portée cylindrique 19h entre laquelle et une virole structurelle 20 est disposé un palier 21.

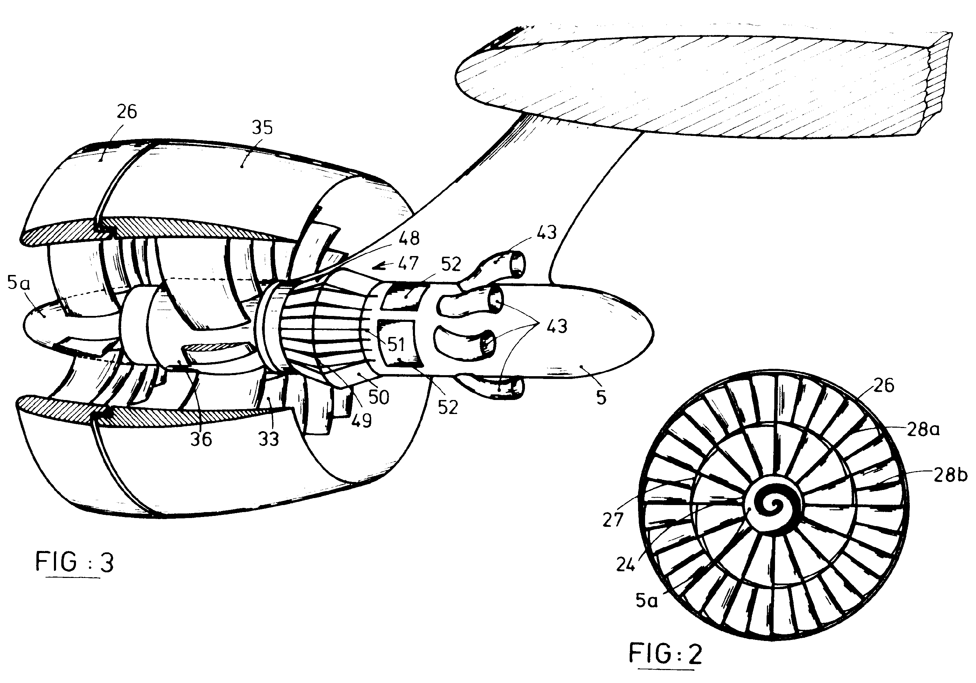

L'extrémité radialement externe des aubes 19a du premier étage de la turbine libre 19 est reliée par un voile conique 22 délimitant la chambre 18 à un arbre central 23 s'étendant vers l'avant 5a du moteur et supportant un disque 24 portant la soufflante avant 25. Dans le mode de réalisation repésenté ici, la soufflante 25 comporte un anneau externe 26 de canalisation du flux secondaire et un anneau intermédiaire 27 formé par des nageoires des pales 28. L'anneau intermédiaire 27 délimite une grille externe qui, dans la variante montrée à la figure 2, comporte entre chaque paire d'aubes 28a une aube intermédiaire 28b de sorte que la grille externe comporte deux fois plus de pales que la grille interne, cette disposition visant à accroître la résistance de la roue vis à vis de l'ingestion. Cette soufflante de conception monobloc est réalisée en matériaux composites.

Le second rotor 29 de turbine lente comporte six étages 29a à 29f reliés par un tambour externe 29g comportant une partie avant en forme de voile conique 30 se terminant en virole cylindrique supportant par une bride 31 le disque 32 de la soufflante arrière 33. Celle-ci comporte des pales 34 et un anneau externe 35 tournant en sens opposé à l'anneau 26 de la soufflante avant.

Dans la partie basse des pales 34, la soufflante 33 comporte une plate-forme intermédiaire 36 formant un anneau disposé dans le prolongement amont de l'enveloppe externe 5 du moteur et réalisant une manche 37 annulaire d'entrée d'air pour les canaux 8 d'entrée d'air du flux chaud. Cette soufflante, de conception monobloc est également réalisée en matériaux composites.

L'ensemble turbine 29/arbre de soufflante 30 est monté tournant à l'avant à l'intérieur d'un voile conique avant structurel 38 du moteur au moyen d'un palier amont 39 et à l'arrière sur l'extérieur de la virole structurelle 20 par un palier 40.

Un palier amont 41 disposé entre l'arbre central 23 de la soufflante avant et l'arbre 30 de la soufflante arrière permet la rotation de l'arbre 23.

En arrière des turbines de travail 19 et 29, le conduit annulaire 42 de sortie des gaz se raccorde sur une multiplicité de canaux 43 qui débouchent à l'extérieur de l'enveloppe externe du moteur autour de laquelle ils sont disposés circonférentiellement, intercalés entre les canaux 8 d'entrée d'air.

Tel que décrit ci-dessus, l'ensemble formé par les turbines libres 19, 29 et les soufflantes 25 et 33 forment un tout modulaire qui peut facilement être désolidarisé par l'avant du générateur de gaz 10 au niveau des labyrinthes 44, 45, 46 qui assurent l'étanchéité entre les parties tournantes et la partie structurelle du moteur.

Dans le mode de réalisation des soufflantes qui a été décrit ci-dessus, les soufflantes 25 et 33 ont des aubes à calage fixe.

Comme déja évoqué précédemment elles sont préférablement réalisées monobloc en matériau composite, ce qui permet des applications à des moteurs à très grand taux de dilution, la vitesse périphérique de la carène étant inférieure à 200 m/s. Cette solution a pour intérêt la réduction potentielle de masse qui en résulte.

Avec des soufflantes à calage fixe, il peut être intéressant de réaliser une variation de section du flux secondaire permettant de contrebalancer l'absence de calage variable des aubes.

Cette variation de section de sortie de la tuyère secondaire peut être réalisée au moyen d'un dispositif déformable 47 (schématisé en pointillés sur la figure 1) porté par la partie amont de l'enveloppe externe 5 du moteur.

Le dispositif déformable peut être constitué par une peau annulaire externe gonflable radialement par des moyens aéro-ou hydrodynamiques.

Dans le mode de réalisation représenté à la figure 3, le dispositif déformable 47 peut être constitué par un ensemble annulaire de volets longitudinaux 48 menants, articulés à leur bord amont sur l'enveloppe externe 5 et dont le bord aval comporte une charnière 49 d'articulation avec des volets menés 50 situés en aval et dont le bord aval coulisse dans des glissières longitudinales 51 de l'enveloppe 5. Les volets 48, 50 peuvent être déplacés par vérins pour former un col à section variable avec la partie aval de l'anneau externe arrière 35 et permettre la variation de section de la veine secondaire.

Un moteur tel qu'ici décrit peut être doté d'un système d'inversion du flux secondaire formé de panneaux 52 articulés sur leur bord aval sur l'enveloppe 5 et déplaçables radialement par vérins pour venir obturer partiellement l'écoulement secondaire et assurer la fonction de reverse du flux froid.

Le mode de réalisation des soufflantes décrit ci-dessus montre des soufflantes monoblocs.

Il est évident que les soufflantes peuvent être réalisées classiquement avec des aubes séparables montées dans des encoches des disques 24 et 32 tandis que les anneaux 26 et 35 sont réalisés sous forme d'assemblage de plate-formes supérieurs des aubes.

Dans le cas où les aubes sont unitaires, les soufflantes peuvent être munies d'un dispositif de calage variable desdites aubes,ce qui évite la nécessité d'un dispositif déformable de variation de la section de la veine secondaire.

Une telle structure trouve son intérêt dans le fait de pouvoir réaliser des moteurs à très grand taux de dilution à soufflantes tractrices avec un faible maître-couple, ce qui facilite leur montage suspendu sous les ailes d'un avion, ce type de montage étant particulièrement nécessaire pour les avions quadriréacteurs.

## Revendications

1. Moteur à turbine à gaz destiné à la propulsion d'un avion, du genre comportant un générateur de gaz (10) qui alimente deux turbines de travail lentes et contrarotatives (19, 29) entrainant deux soufflantes (25, 33) et dans lequel, par rapport au sens de déplacement de l'avion, les gaz circulent dans le générateur de gaz de l'arrière vers l'avant puis de l'avant vers l'arrière dans les turbines libres, caractérisé en ce qu'à la turbine libre radialement interne (19) est associé un arbre central (23) s'étendant vers l'avant du moteur et supportant un disque (24) portant la soufflante avant (25) tandis qu'à la turbine libre radialement externe (29) est associée un tambour avant (30) monté tournant entre l'arbre (23) de soufflante avant et une structure fixe (39) du moteur, ledit tambour portant la soufflante arrière (33) de telle sorte que le moteur comprend de l'avant vers l'arrière et successivement :
- la soufflante avant (25)
- la soufflante arrière (33) et en superposition radiale la manche (37) d'entrée d'air du générateur de gaz, ladite manche étant formée de canaux (37, 38) disposés à l'intérieur de l'enveloppe externe (5) du moteur,
- les turbines libres (19, 29) imbriquées et en superposition radiale, le conduit axial (17) du générateur de gaz
- la turbine (15, 14) du générateur de gaz
- la chambre de combustion (13)
- les compresseurs (12, 11) du générateur de gaz
- une chambre annulaire (9) d'entrée d'air du générateur de gaz.

2. Moteur de propulsion selon la revendication 1, caractérisé en ce que la soufflante arrière (33) comporte au-dessus de sa plateforme de pied une seconde plateforme intermédiaire (36) disposée dans le prolongement avant de l'enveloppe externe (5) du moteur, lesdites plateformes formant la manche (37) d'entrée d'air du générateur de gaz.

3. Moteur de propulsion selon l'une des revendications 1 ou 2 caractérisé en ce que chacune des soufflantes comporte un anneau externe (26, 35) de canalisation du flux secondaire.

4. Moteur de propulsion selon l'une quelconque des revendications 1 à 3 caractérisé en ce que les soufflantes (25, 33) sont munies chacune d'un dispositif de changement de pas.

5. Moteur de propulsion selon l'une quelconque des revendications 1 à 3 caractérisé en ce que les soufflantes (25, 33) sont à calage fixe et en ce que la partie amont de l'enveloppe externe (5) du moteur comporte un dispositif déformable (47) apte à faire varier la section de sortie de la tuyère secondaire.

6. Moteur de propulsion selon la revendication 5 caractérisé en ce que le dispositif déformable est constitué d'un ensemble annulaire de volets amont menants (48) articulés à leur bord amont, déplaçables radialement par vérin et entrainant des volets menés aval (50).

7. Moteur de propulsion selon l'une des revendications 5 ou 6 caractérisé en ce qu'il comporte sur son enveloppe externe des panneaux (52) d'inversion de sens du flux articulés sur leur bord aval et déplaçables radialement par vérins.

8. Moteur de propulsion selon l'une quelconque des revendications 1 à 7 caractérisé en ce que l'ensemble comportant la soufflante arrière (33) et la turbine libre (29) radialement externe est monté tournant à l'avant au moyen d'un palier (39) disposé intérieurement à l'extrémité cylindrique d'une virole amont (38) structurelle conique du moteur et à l'arrière à l'extérieur d'une virole structurelle (20) par un palier aval (40) porté par l'extrémité interne aval (29f) de la turbine libre (29).

9. Moteur de propulsion selon l'une quelconque des revendications 1 à 8 caractérisé en ce que l'ensemble comportant la soufflante avant (25) et la turbine libre (19) radialement interne est monté tournant à l'avant au moyen d'un palier (41) disposé entre l'arbre central (23) et le tambour (30) portant la soufflante arrière (33) et à l'arrière au moyen d'un palier aval (21) disposé entre la virole structurelle (20) et une portée cylindrique aval (19h) de la turbine libre.

10. Moteur de propulsion selon l'une quelconque des revendications 5 à 9 caractérisé en ce que la soufflante avant (25) comporte un anneau intermédiaire (27) à mi-hauteur des pales de la soufflante et en ce que des aubes intermédiaires (28b) sont disposées entre l'anneau externe (26) et l'anneau intermédiaire (27) formant une grille radialement externe de soufflante avant possédant un nombre de pales (28a, 28b) double de celui (28a) de la grille interne.

## Patentansprüche

1. Gasturbinenmotor zum Antrieb eines Flugzeugs, mit einem Gasgenerator (10), der zwei langsame gegenläufige Turbinen (19, 29) speist, die zwei Bläser (25, 33) antreiben, wobei die Gase, bezogen auf die Bewegungsrichtung des Flugzeugs, in dem Gasgenerator von hinten nach vorn, dann in den Freistrahlturbinen von vorn nach hinten zirkulieren, **dadurch gekennzeichnet**, daß die radial innere Freistrahlturbine (19) mit einer zentralen Welle (23) verbunden ist, die sich zur Vorderseite des Motors erstreckt und eine Scheibe (24) trägt, die ihrerseits den vorderen Bläser (25) trägt, während die radial äußere Freistrahlturbine (29) mit einer vorderen Trommel (30) verbunden ist, die zwischen der Welle (23) des vorderen Bläsers und einer festen Struktur (39) des Mortors drehbar montiert ist, wobei diese Trommel den hinteren Bläser (33) trägt, so daß der Motor aufeinanderfolgend von vorn nach hinten folgende Teile aufweist:
- den vorderen Bläser (25),
- den hinteren Bläser (33) und in radialer Überlagerung den Lufteintrittsstutzen (37) des Gasgenerators, der von im Innern des Außenmantel (5) des Motors angeordneten Kanälen (37, 38) gebildet wird,
- die ineinander verschachtelten Freistrahlturbinen (19, 29) und, in radialer Überlagerung, die axiale Leitung (18) des Gasgenerators,
- die Turbine (15, 14) des Gasgenerators,
- die Brennkammer (13),
- die Verdichter (12, 11) des Gasgenerators und
- eine ringförmige Lufteintrittskammer (9) des Gasgenerators.

2. Antriebsmotor nach Anspruch 1, dadurch gekennzeichnet, daß der hintere Bläser (33) über seiner Fußplattform eine zweite Zwischenplattform (36) aufweist, die in der vorderen Verlängerung des Außenmantels des Motors angeordnet ist, wobei diese Plattformen den Lufteintrittsstutzen (37) des Gasgenerators bilden.

3. Antriebsmotor nach einem der Ansprüche 1 oder 2, dadurch gekennzeichnet, daß jeder Bläser einen Außenring (26, 35) zur Kanalisierung des Sekundärstroms besitzt.

4. Antriebsmotor nach einem der Ansprüche 1 bis 3, dadurch gekennzeichnet, daß die Bläser (25, 33) jeweils mit einer Vorrichtung zur Steigungsänderung ausgestattet sind.

5. Antriebsmotor nach einem der Ansprüche 1 bis 3, dadurch gekennzeichnet, daß die Bläser (25, 33) eine feste Anstellung haben und daß der stromaufwärtige Teil des Außenmantels (5) des Motors eine verformbare Vorrichtung (47) zur Änderung des Austrittsquerschnitts der sekundären Düse aufweist.

6. Antriebsmotor nach Anspruch 5, dadurch gekennzeichnet, daß die verformbare Vorrichtung aus einer Ringanordnung von führenden stromaufwärtigen Klappen (48) besteht, die an ihrem stromaufwärtigen Rand angelenkt und durch Hubzylinder in radialer Richtung bewegbar sind und die geführten stromabwärtige Klappen (50) antreiben.

7. Antriebsmotor nach einem der Ansprüche 5 oder 6, dadurch gekennzeichnet, daß er auf seinem Außenmantel Platten (52) zur Strömungsrichtungsumkehr aufweist, die an ihrem stromabwärtigen Rand angelenkt und durch Hubzylinder radial bewegbar sind.

8. Antriebsmotor nach einem der Ansprüche 1 bis 7, dadurch gekennzeichnet, daß die den hinteren Bläser (33) und die radial äußere Freistrahlturbine (29) umfassende Einheit vorn in einem innerhalb des zylindrischen Endbereichs eines stromaufwärtigen konischen Konstruktionsrings (38) des Motors angeordneten Lager (39) und hinten außerhalb eines Konstruktionsring (20) in einem von dem inneren stromabwärtigen Endbereich (29f) der Freistrahlturbine (29) getragenen stromabwärtigen Lager (40) drehbar montiert ist.

9. Antriebsmotor nach einem der Ansprüche 1 bis 8, dadurch gekennzeichnet, daß die aus dem vorderen Bläser (25) und der radial inneren Freistrahlturbine (19) bestehende Einheit vorn in einem zwischen der zentralen Welle (23) und der den hinteren Bläser (33) tragenden Trommel (30) angeordneten Lager (41) und hinten in einem zwischen dem Konstruktionsring (20) und einer stromabwärtigen zylindrischen Lagerfläche (19h) der Freistrahlturbine angeordneten stromabwärtigen Lager (23) drehbar montiert ist.

10. Antriebsmotor nach einem der Ansprüche 5 bis 9, dadurch gekennzeichnet, daß der vordere Bläser (25) in halber Höhe der Schaufelblätter des Bläsers einen Zwischenring (27) aufweist und daß zwischen dem Außenring (26) und dem Zwischenring (27) Zwischenschaufeln (28e) angeordnet sind, die ein radial äußeres vorderes Bläsergitter bilden, das eine Anzahl von Schaufelblättern (28a, 28b) besitzt, die doppelt so groß ist wie die Anzahl der Schaufelblätter (28a) des inneren Gitters.

## Claims

1. Gas turbine engine intended for the propulsion of an aircraft, of the type comprising a gas generator (10) which supplies two slow and counter-rotating working turbines (19, 29) driving two fans (25, 33) and in which, in relation to the direction of flight of the aircraft, the gases circulate in the gas generator from the rear towards the front then from the front towards the rear in the free turbines, characterised in that the radially inner free turbine (19) is associated with a central shaft (23) extending towards the front of the engine and carrying a disc (24) carrying the front fan (25) whilst the radially outer free turbine (29) is associated with a front drum (30) mounted rotatably between the shaft (23) of the front fan and a fixed structure (39) of the engine, the said drum carrying the rear fan (33) in such a way that the engine comprises from the front to the rear and successively:
- the front fan (25)
- the rear fan (33) and in radial superimposition the air intake duct (37) for the gas generator, the said duct being formed of channels (37, 38) placed inside the outer casing (5) of the engine
- the imbricated free turbines (19, 29), and radially superimposed, the axial duct (17) of the gas generator
- the turbine (15, 14) of the gas generator
- the combustion chamber (13)
- the compressors (12, 11) of the gas generator
- an annular air intake chamber (9) for the gas generator.

2. Propulsion engine in accordance with Claim 1, characterised in that the rear fan (33) comprises above its blade root platform a second intermediate platform (36) arranged as the frontward extension of the outer casing (5) of the engine, the said platforms forming an air intake sleeve (37) for the gas generator.

3. Propulsion engine in accordance with either of Claims 1 or 2, characterised in that each of the fans comprises an outer shroud (26, 35) to channel the secondary airflow.

4. Propulsion engine in accordance with any of Claims 1 to 3, characterised in that the fans (25, 33) are each equipped with a pitch-changing device.

5. Propulsion engine in accordance with any of Claims 1 to 3, characterised in that the fans (25, 33) are of fixed pitch and in that the upstream part of the outer casing (5) of the engine comprises a deformable device (47) capable of causing the cross section of the outlet portion of the duct to vary.

6. Propulsion engine in accordance with Claim 5, characterised in that the deformable device consists of an annular assembly of upstream leading shutters (48) hinged at their upstream edge, radially movable by a ram and actuating downstream led shutters (50).

7. Propulsion engine in accordance with either of Claims 5 or 6, characterised in that it comprises on its outer casing thrust-reversing panels (52) hinged on their downstream edge and radially movable by rams.

8. Propulsion engine in accordance with any of Claims 1 to 7, characterised in that the assembly comprising the rear fan (33) and the radially outer free turbine (29) is mounted rotatably at the front by means of a bearing (39) placed inside at the cylindrical end of an upstream conical structural shell (18) of the engine and at the rear on the outside of a structural shell (20) by a rear bearing (40) carried by the downstream inner end (29f) of the free turbine (29).

9. Propulsion engine in accordance with any of Claims 1 to 8, characterised in that the assembly comprising the front fan (25) and the radially inner free turbine (19) is mounted rotatably at the front by means of a bearing (41) placed between the central shaft (23) and the drum (30) carrying the rear fan (33) and at the rear by means of a rear bearing (21) placed between the structural shell (20) and a downstream cylindrical extension (19h) of the free turbine.

10. Propulsion engine in accordance with any of Claims 5 to 9, characterised in that the front fan (25) comprises an intermediate ring (27) at mid-height of the fan blades and in that intermediate blades (28b) are arranged between the outer shroud (26) and the intermediate ring (27) forming a radially outer set having a number of blades (28a, 28b) twice that (28a) of the inner set.
